# EUROPÄISCHE PATENTSCHRIFT

(11) **EP 0 590 556 B1**
(45) Veröffentlichungstag und Bekanntmachung des Hinweises auf die Patenterteilung: **06.08.1997**
(21) Anmeldenummer: 93115522.0
(22) Anmeldetag: 25.09.1993
(51) Int. Cl.: C07F 9/655

(54) **Verfahren zur Reduzierung des Phosphatgehaltes im Abwasser bei der Herstellung von Metallsalzen des Ascorbinsäure-2-monophosphats**
Process for reducing the phosphate content in the effluents from the preparation of metal salts of ascorbic acid-2-monophosphate
Procédé de réduction du contenu en phosphates dans les effluents aqueux provenant de la préparation de sels metalliques du mono phosphate-2 de l'acide ascorbique

(30) Priorität: 01.10.1992 DE 4232997
(43) Veröffentlichungstag der Anmeldung: 06.04.1994
(73) Patentinhaber: BASF Aktiengesellschaft, 67063 Ludwigshafen (DE)
(72) Erfinder: Kaiser, Klaus, Dr., D-6730 Neustadt (DE); Paust, Joachim, Dr., D-6708 Neuhofen (DE)

(56) Entgegenhaltungen:
- EP-A- 0 388 869
- DE-A- 4 000 977
- US-A- 5 110 951
- US-A- 5 149 829

## Beschreibung

Die Erfindung betrifft ein vorteilhaftes Verfahren zur Reduzierung des Phosphatgehaltes im Abwasser bei der Herstellung von Metallsalzen des Ascorbinsäure-2-monophosphats.

L-Ascorbinsäure ist ein lebenswichtiger Teil einer ausgewogenen menschlichen oder auch tierischen Ernährung. Leider ist Vitamin C das am wenigsten stabile Vitamin in Nahrungsmitteln. Ascorbinsäure-2-monophosphat ist dagegen eine oxidationsstabile Form von Vitamin C. Es verfügt außerdem über eine allgemeine Bioverfügbarkeit, da es durch Phosphatasen in vivo und in vitro zu Ascorbinsäure spaltbar ist (dies wurde nachgewiesen, z.B. am Meerschweinchen, an Broilern, an Ferkeln, Rhesusaffen und Fischen). Dementsprechend wurden zahlreiche Versuche unternommen, ein vorteilhaftes Verfahren zur Herstellung von Salzen des Ascorbinsäure- 2-monophosphats zu entwickeln. Genannt seien beispielsweise die Verfahren gemäß den Patenten US 4 179 445, US 4 724 262, EP-A 426 020, DE-A 39 09 198, DE-A 40 00 977, DE-A 40 26 787, US 4 179 445 und WO-A 91/13 895. Die Verfahren unterscheiden sich im wesentlichen in der Art und Weise, wie man die großen Mengen an anorganischen Salzen, die aus dem Phosphorylierungsprozess mit POCl₃ stammen, entfernt und in welcher Form man das Ascorbinsäure-2-monophosphat ausfällt. Gute Erfahrungen liegen vor mit der Ausfällung des Ascorbinsäure-2-monophosphats als KMg-Salz (vgl. DE 39 09 198, DE 40 00 977 und DE 40 26 787) oder als Calciumsalz (vgl. US 4 179 445 und WO-A 91/13895).

Nachteilig an den meisten Verfahren ist, daß die Abwasser nach der Kristallisation der Metallsalze des Ascorbinsäure-2-monophosphats (hier allgemein als Abwasser bezeichnet) noch zu stark phosphathaltig sind, was zu einer Eutrophierung der Gewässer, in die sie eingeleitet werden, führen kann. Im Sinne einer Verminderung der Umweltbelastung ist es daher von Interesse, den Phosphatgehalt im Abwasser stark zu reduzieren.

Der Phosphor liegt in den Abwassern überwiegend in organisch gebundener Form, beispielsweise als nicht ausgefallenes Ascorbinsäure-2-monophosphat, als Bis-2-ascorbyl-monophosphat und weiteren organischen Nebenprodukten vor. So fallen beispielsweise bei einer Fällung von L-Ascorbinsäure-2-monophosphat als Calciumsalz Abwässer an, die etwa 0,15 % Phosphor und etwa 0,35 % Kohlenstoff enthalten, was bei einem Anfall von 1 Tonne Abwasser schon etwa 1,5 kg P bedeutet.

Es war daher die Aufgabe der Erfindung, ein Verfahren zu entwickeln, das es erlaubt, den Gehalt an Phosphat in den Abwässern der Ascorbat-2-monophosphatherstellung auf möglichst einfache und billige Weise wesentlich zu reduzieren.

Gegenstand der Erfindung ist dementsprechend ein Verfahren zur Reduzierung des Phosphatgehalts im Abwasser bei der Herstellung von Salzen des Ascorbinsäure-2-monophosphats, das dadurch gekennzeichnet ist, daß man
A) das Abwasser von der Kristallisation der Metallsalze von Ascorbinsäure-2-monophosphat zur Freisetzung des organisch gebundenen Phosphors mit einem Alkali- oder Erdalkalihypochlorit, Chlor- oder H₂O₂ behandelt und
B) das so erhaltene und/oder das noch im Abwasser vorhandene anorganische Phosphat bei einem pH-Wert zwischen 9 und 12 als schwerlösliches Phosphat ausfällt.

Besonders vorteilhaft gestaltet sich das erfindungsgemäße Verfahren, wenn man im Reaktionsschritt B das anorganische Phosphat als Calciumphosphat ausfällt. Dies kann bei Abwässern, die von der Fällung des Ascorbat-2-monophosphats her noch ausreichend Calciumionen enthalten, einfach durch Einstellen des pH-Wertes auf einen Wert von etwa 9-12 mittels eines Alkali- oder Erdalkalihydroxids erfolgen. Bei Abwässern, die keine oder nur unzureichende Mengen an Calciumionen enthalten, versetzt man das mit dem Hypochlorit, Chlor oder H₂O₂ behandelte Abwasser mit Kalkmilch unter Aufrechterhaltung eines pH-Wertes von etwa 9-12.

### Zu A)

Durch die Behandlung des Abwassers mit einem Hypochlorit, H₂O₂ oder mit Chlor werden überraschenderweise die organischen Phosphorverbindungen sehr schnell vollständig gespalten, wodurch das nunmehr anorganische Phosphat als schwerlösliches Phosphat ausfällbar wird.

Mit Vorteil verwendet man als Hypochlorit ein Alkalihypochlorit, insbesondere Natriumhypochlorit in Form seiner wässrigen Lösung, die als sogenannte Chlorbleichlauge (enthaltend etwa 12,0 bis 14 % aktives Chlor) ein sehr billiges Handelsprodukt ist.

Das Alkali- oder Erdalkalihypochlorit verwendet man im allgemeinen in Mengen von 1 bis 2, vorzugsweise 1,5 bis 1,8 Mol pro Mol von im Abwasser enthaltenen Phosphorverbindungen.

Die erfindungsgemäße Behandlung des Abwassers mit Chlor erfolgt einfach durch Einleiten des Chlors ins Abwasser. Auch das Chlor verwendet man hierbei in Mengen von etwa 1 bis 2, vorzugsweise 1,5 bis 1,8 Mol pro Mol der enthaltenen Phosphorverbindungen.

Zur Umsetzung mit H₂O₂ versetzt man das Abwasser mit wässriger H₂O₂-Lösung, gegebenenfalls nach einem Ansäuern mit HCl auf einen pH-Wert von 2-3. H₂O₂ verwendet man hierbei in Mengen von etwa 1 bis 10 Mol pro Mol der enthaltenen Phosphorverbindungen. Zur Umsetzung mit H₂O₂ werden längere Reaktionszeiten benötigt, insbesondere wenn man das Abwasser nicht ansäuert. Im allgemeinen reicht ein Rühren von 1 bis 5, vorzugsweise 2-4 Stunden.

Welchen beachtlichen Vorteil diese Behandlung mit einem Hypochlorit für die Reduzierung des Phosphorgehalts im Abwasser mit sich bringt, ergibt sich beispielsweise aus einem Vergleich von Beispiel 2a mit dem Vergleichsbeispiel 2b.

### Zu B)

Die durch die Hypochlorit-, Chlor- bzw. H₂O₂-Behandlung im Abwasser erhaltenen Phosphationen können anschließend als schwerlösliches Phosphat ausgefällt werden.

Bei Abwässern aus der Herstellung von Calciumsalzen des Ascorbinsäure-2-monophosphats genügt es hierzu, daß man das behandelte Abwasser mit einem Alkali- oder Erdalkalihydroxid auf einen pH-Wert von 9 bis 12 einstellt.

Bei Abwässern, die aus der Herstellung von anderen Metallsalzen des Ascorbinsäure-2-monophosphats stammen, muß man dem Abwasser nach der Chlor-, H₂O₂- oder Hypochloritbehandlung noch ein Metallsalz zusetzen, das in Wasser schwerlösliche Phosphate bildet. Hierzu können Calciumverbindungen, Aluminiumsulfat oder Eisen (III)salze verwendet werden. Mit besonderem Vorteil verwendet man hierzu Calciumverbindungen, insbesondere die billig verfügbare Kalkmilch (wässrige Lösung von Ca(OH₂)).

Das Metallsalz verwendet man im allgemeinen in Mengen von etwa 2 bis 6, vorzugsweise 3 bis 5 Mol pro Mol anorganisches Phosphat.

Mit Hilfe des erfindungsgemäßen Verfahrens kann der Phosphorgehalt im Abwasser bei der Herstellung von Metallsalzen des Ascorbinsäure-2-monophosphats auf einfache und billige Weise auf Werte von weniger als 0,01 Gew.-% reduziert werden.

### Beispiel 1

670 g eines Abwassers von der Kristallisation des Calciumsalzes von Ascorbinsäure-2-monophosphat enthaltend 0,23 % C; 0,1 % = 670 mg P; 0,37 % Ca; 5,3 % K; 0,03 % Mg und 5,5 % Cl; wurden mit 26,8 g einer Natriumhypochloritlösung (12,5 % aktives Chlor) versetzt und das Reaktionsgemisch 10 Minuten (min) bei Raumtemperatur (RT) gerührt. Anschließend wurde der pH-Wert der Lösung durch Zugabe von 50%iger wässriger KOH auf 12 eingestellt und der ausfallende Feststoff nach 8-stündigem Rühren durch Filtration abgetrennt. Man erhielt nach Trocknung 10,98 g eines Kristallisats, das 7,8 % C; 5,3 % P; 17,5 % Ca; 12,7 % K; 1,5 % Mg und 10,5 % Cl enthält sowie 665 g eines Filtrats, das 0,11 % C; <0,01 %, d.h. < 66 mg P; 0,07 % Ca; 5,4 % K; <0,01 % Mg und 5,8 % Cl enthält.

Der Gehalt an P im Abwasser wurde also von 0,1 % auf weniger als 0,01 % herabgesetzt.

### Beispiel 2

### a) erfindungsgemäße Behandlung des Abwassers

525 g eines Abwassers von der Kristallisation von L-Ascorbinsäure-2-monophosphat als Calciumsalz enthaltend 0,43 % C; 0,17 % P; 0,58 % Ca; 7,5 % K und 8,0 % Cl, wurden mit 21 g einer Natriumhypochloritlösung (12,5 % aktives Chlor) versetzt und das Reaktionsgemisch 15 min bei RT gerührt. Anschließend wurde der pH-Wert der Lösung durch Zugabe einer 50%igen wässrigen KOH auf einen pH-Wert von 12 eingestellt und der ausfallende Feststoff nach 8-stündigem Rühren abfiltriert. Man erhielt 510 g eines Filtrats, das 0,09 % C, <0,01 % P, 0,04 % Ca, 7,7 % K und 7,6 % Cl enthielt.

Der Gehalt an P im Abwasser wurde also von 0,17 % auf weniger als 0,01 % reduziert.

### b) Vergleichsbeispiel

525 g des in Beispiel 2 beschriebenen Abwassers wurden ohne vorherige Behandlung mit Natriumhypochloritlösung mittels einer 50%igen wässrigen KOH auf einen pH-Wert von 12 eingestellt. Der ausfallende Feststoff wurde nach 8-stündigem Rühren abfiltriert. Es wurden 503 ml Filtrat erhalten, das 0,2 % C; 0,04 % P; 0,29 % Ca; 7,6 % K und 7,4 % Cl enthält.

Der Gehalt an P im Abwasser wurde also von 0,17 % nur auf 0,04 % reduziert.

### Beispiel 3

500 g eines Abwassers von der Herstellung von Calcium-L-ascorbat-2-phosphat enthaltend 0,18 % P; 0,41 % C, 0,54 % Ca, 7,3 % Cl; 7,2 % K und 0,06 % Mg wurden mit 40 g einer 30 %igen wäßrigen H₂O₂-Lösung versetzt und das Reaktionsgemisch 4 Stunden bei RT gerührt. Anschließend wurde der pH-Wert durch Zugabe von 50 %iger wäßriger KOH auf 12 eingestellt und der ausfallende Feststoff nach 8-stündigem Rühren abfiltriert. Man erhielt dabei 528 g eines Filtrats, das 0,02 % P; 0,23 % C, < 0,01 % Ca, 6,7 % Cl; 8,2 % K und <0,01 % Mg enthielt.

### Beispiele 4 und 5 mit Vergleichsbeispielen

Jeweils 300 g eines Abwassers von der Herstellung von Calcium-L-ascorbat-2-monophosphat mit dem aus der Tabelle ersichtlichen Gehalt an Phosphor wurde mit der aus der Tabelle ersichtlichen Menge einer wäßrigen Natriumhypochloritlösung versetzt und nach 10-minütigem Rühren bei RT mit 18 %iger Kalkmilch bzw. einer 50-%igen wäßrigen KOH auf den in der Tabelle angegebenen pH-Wert eingestellt, der ausfallende Feststoff nach 8-stündigem Rühren durch Filtration abgetrennt und getrocknet. Der Gehalt an Phosphor im behandelten Abwasser wurde in Gew.-% sowie in g Gesamtphosphor in der Tabelle dargestellt.

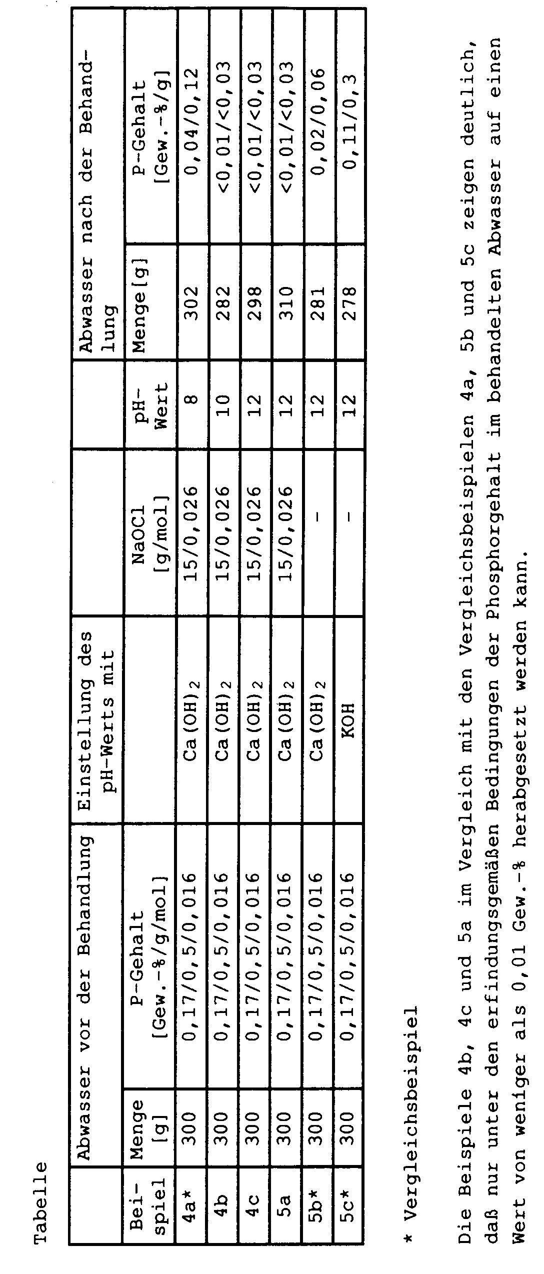

## Patentansprüche

1. Verfahren zur Reduzierung des Phosphatgehalts im Abwasser bei der Herstellung von Salzen des Ascorbinsäure-2-monophosphats, dadurch gekennzeichnet, daß man
A. das Abwasser von der Kristallisation der Metallsalze von Ascorbinsäure-2-monophosphat mit einem Alkali- oder Erdalkalihypochlorit, Chlor oder H₂O₂ behandelt.
und
B. das so durch Freisetzen aus organisch gebundenem Phosphor erhaltene und/oder das noch im Abwasser enthaltene anorganische Phosphat bei einem pH-wert von 9-12 als schwerlösliches Phosphat ausfällt.

2. Verfahren gemäß Anspruch 1, dadurch gekennzeichnet, daß man im Verfahrensschritt A das Abwasser mit Natriumhypochlorit behandelt.

3. Verfahren gemäß Anspruch 1, dadurch gekennzeichnet, daß man im Verfahrensschritt A das Abwasser mit etwa 1 bis 2 Mol an dem Alkali- oder Erdalkalihypochlorit bzw. an Chlor pro Mol enthaltener Phosphorverbindung behandelt

4. Verfahren gemäß Anspruch 1, dadurch gekennzeichnet, daß man in Verfahrensschritt B das anorganische Phosphat als Calciumphosphat ausfällt.

5. Verfahren gemäß Anspruch 1, dadurch gekennzeichnet, daß man im Verfahrensschritt B das anorganische Phosphat durch Zugabe von Kalkmilch als Calciumphosphat ausfällt.

6. Verfahren gemäß Anspruch 1, dadurch gekennzeichnet, daß man im Verfahrensschritt B das anorganische Phosphat aus einem Abwasser, das noch ausreichend Calciumionen enthält, durch Einstellen des pH-Wertes auf einen Wert von etwa 9 bis 12 mittels eines Alkali- oder Erdalkalihydroxids als Calciumphosphat ausfällt.

## Claims

1. A process for reducing the phosphate content in the waste water from the preparation of salts of ascorbic acid 2-monophosphate, which comprises
A. treating the waste water from the crystallization of the metal salts of ascorbic acid 2-monophosphate with an alkali metal hypochlorite or alkaline earth metal hypochlorite, chlorine or H₂O₂,
and
B. precipitating, at a pH of 9-12, the inorganic phosphate which has been produced from organically bound phosphorus and/or was present in the waste water.

2. A process as claimed in claim 1, wherein the waste water is treated with sodium hypochlorite in step A.

3. A process as claimed in claim 1, wherein the waste water is treated with about 1-2 mol of the alkali metal hypochlorite or alkaline earth metal hypochlorite or of chlorine per mol of phosphorus compound present in step A.

4. A process as claimed in claim 1, wherein the inorganic phosphate is precipitated as calcium phosphate in step B.

5. A process as claimed in claim 1, wherein the inorganic phosphate is precipitated as calcium phosphate by adding lime water in step B.

6. A process as claimed in claim 1, wherein the inorganic phosphate is precipitated as calcium phosphate in step B from a waste water which still contains sufficient calcium ions by adjusting the pH to about 9-12 using an alkali metal hydroxide or alkaline earth metal hydroxide.

## Revendications

1. Procédé pour diminuer la teneur en phosphates des eaux résiduaires de la préparation des sels du 2-monophosphate de l'acide ascorbique, caractérisé par le fait que
A.- on traite les eaux résiduaires de la cristallisation des sels métalliques du 2-monophosphate de l'acide ascorbique par un hypochlorite alcalin ou alcalinoterreux, le chlore ou H₂O₂,
et
B.- on précipite à l'état de phosphate peu soluble, à un pH de 9 à 12, le phosphate minéral obtenu par libération à partir du phosphore organique et/ou encore contenu dans les eaux résiduaires.

2. Procédé selon la revendication 1, caractérisé par le fait que, au stade opératoire A, on traite les eaux résiduaires par l'hypochlorite de sodium.

3. Procédé selon la revendication 1, caractérisé par le fait que, au stade opératoire A, on traite les eaux résiduaires par une à deux moles environ d'hypochlorite alcalin ou alcalino-terreux ou de chlore par mole de dérivé du phosphore contenu dans ces eaux.

4. Procédé selon la revendication 1, caractérisé par le fait que, au stade opératoire B, on précipite le phosphate minéral à l'état de phosphate de calcium.

5. Procédé selon la revendication 1, caractérisé par le fait que, au stade opératoire B, on précipite le phosphate minéral à l'état de phosphate de calcium par addition d'un lait de chaux.

6. Procédé selon la revendication 1, caractérisé par le fait que, au stade opératoire B, on précipite le phosphate minéral d'eaux résiduaires contenant encore suffisamment d'ions calcium à l'état de phosphate de calcium par réglage du pH à un niveau d'environ 9 à 12 à l'aide d'un hydroxyde alcalin ou alcalinoterreux.
